# EUROPEAN PATENT APPLICATION

(11) **EP 4 398 326 A1**
(43) Date of publication of application: **10.07.2024**
(21) Application number: 22863979.5
(22) Date of filing: 07.06.2022
(51) Int. Cl.: H01M 4/13, H01M 4/62, H01M 4/66, H01G 11/28, H01G 11/38

(54) **ELECTRODE**

(30) Priority: 31.08.2021 JP 2021141134
(71) Applicant: Panasonic Intellectual Property Management Co., Ltd., Osaka-shi, Osaka 540-6207 (JP)
(72) Inventor: IZUMI Reiko, Kadoma-shi, Osaka 571-0057 (JP); GONJO Takayuki, Kadoma-shi, Osaka 571-0057 (JP); KATOU Daisuke, Kadoma-shi, Osaka 571-0057 (JP); KOTANI Norihiro, Kadoma-shi, Osaka 571-0057 (JP); YAMASHITA Hiroki, Kadoma-shi, Osaka 571-0057 (JP)
(74) Representative: Novagraaf International SA
(86) International application number: PCT/JP2022/022995
(87) International publication number: WO 2023/032391

(57) **Abstract**

An electrode according to one example of an embodiment comprises a core material, a mixture layer, and an electrically conductive intermediate layer. A conductive agent contained in the intermediate layer has a particle size distribution which has a first peak that is within the particle diameter range of greater than or equal to 0.005 µm and less than or equal to 0.07 µm and a second peak that is within the particle diameter range of greater than or equal to 0.3 µm and less than or equal to 20 µm. The content of first particles that constitute the first peak is greater than or equal to 1 mass% and less than or equal to 40 mass% of the mass of the conductive agent. Second particles that constitute the second peak have an average aspect ratio of greater than or equal to 1 and less than or equal to 9. A second binder mainly includes a thermoplastic resin that has a melting point of greater than or equal to 100°C and less than or equal to 200°C, and has a composition that is different from the composition of a first binder. The average thickness T of the intermediate layer in a region in which there are no second particles is greater than or equal to 0.1 µm and less than or equal to 5 µm, and the value obtained by dividing the average minor axis diameter of the second particles by the average thickness T of the intermediate layer is greater than or equal to 1 and less than or equal to 4.

## Description

### TECHNICAL FIELD

The present disclosure relates to an electrode, and in particular to an electrode for a secondary battery.

### BACKGROUND ART

An electrode of a secondary battery such as a lithium ion battery generally comprises a core which is a metal foil, and a mixture layer which includes an active material, a conductive agent, and a binder, and which is formed over the core. There is also known an electrode in which an intermediate layer which is electrically conductive is provided between the core and the mixture layer (refer to Patent Literatures 1 and 2). The intermediate layer reduces, for example, resistance at an interface between the core and the mixture layer, and contributes to improving a power characteristic of the battery. Patent Literatures 1 and 2 describe the use of two kinds of particles having different particle sizes from each other, as electrically conductive particles included in the intermediate layer.

The electrode of the related art is in general produced by a wet method in which an electrode mixture slurry is applied over a surface of the core, and the coating film is dried and compressed. In this case, there is a problem in that, migration, which is a phenomenon in which the binder moves during drying of the coating film, tends to easily occur. When the migration of the binder occurs, an amount of binder becomes larger on a surface side of the mixture layer than a core side of the mixture layer, resulting in an unevenness in a distribution of the binder in a thickness direction of the mixture layer. In recent years, a dry method is also being studied, in which an electrode mixture sheet is produced by rolling an electrode mixture and shaping in a sheet shape, and laminating the sheet to the core to produce the electrode.

### CITATION LIST

### PATENT LITERATURE

PATENT LITERATURE 1: JP 2010-109080 A
PATENT LITERATURE 2: JP 5098954 B

### SUMMARY

### TECHNICAL PROBLEM

Providing the electrically conductive intermediate layer between the core and the mixture layer of the electrode as described above is effective in reducing the interface resistance between the core and the mixture layer. In particular, in the electrode produced through the dry method, the interface resistance tends to easily increase, and, thus, provision of the electrically conductive intermediate layer is considered to be one of effective means in reducing the interface resistance. However, as a result of studies by the present inventors, it was found that the interface resistance significantly varies depending on the structure of the intermediate layer. There remains room of improvement in the related art including Patent Literatures 1 and 2, from the viewpoint of improvement of the interface resistance between the core and the mixture layer.

An advantage of the present disclosure lies in provision of an electrode having a low interface resistance between the core and the mixture layer.

### SOLUTION TO PROBLEM

According to one aspect of the present disclosure, there is provided an electrode comprising: a core; a mixture layer provided over the core; and an electrically conductive intermediate layer provided between the core and the mixture layer, wherein the mixture layer includes an active material and a first binder, the intermediate layer includes a conductive agent and a second binder, the conductive agent has a particle size distribution including a first peak with a particle size in a range of greater than or equal to 0.005 µm and less than or equal to 0.07 µm, and a second peak with a particle size in a range of greater than or equal to 0.3 µm and less than or equal to 20 µm, a content of particles forming the first peak is greater than or equal to 1 mass% and less than or equal to 40 mass% with respect to a mass of the conductive agent, second particles forming the second peak have an average aspect ratio of greater than or equal to 1 and less than or equal to 9, the second binder has, as a primary component, a thermoplastic resin having a melting point of greater than or equal to 100°C and less than or equal to 200°C, and has a composition different from the first binder, and an average thickness T of the intermediate layer at a region where there is no second particle is greater than or equal to 0.1 µm and less than or equal to 5 µm, and a value obtained by dividing an average short axis diameter of the second particles by the average thickness T of the intermediate layer is greater than or equal to 1 and less than or equal to 4.

According to another aspect of the present disclosure, there is provided an electrode comprising: a core; a mixture layer provided over the core; and an intermediate layer that is electrically conductive and that is provided between the core and the mixture layer, wherein the mixture layer includes an active material and a first binder, the intermediate layer includes a conductive agent and a second binder, the conductive agent includes first particles having a particle size of greater than or equal to 0.005 µm and less than or equal to 0.07 µm that form an aggregated structure of beaded shape, and second particles having a short axis diameter of greater than or equal to 0.3 µm and less than or equal to 20 µm and an aspect ratio of greater than or equal to 1 and less than or equal to 9, a content of the first particles is greater than or equal to 1 mass% and less than or equal to 40 mass% with respect to a mass of the conductive agent, the second binder has, as a primary component, a thermoplastic resin having a melting point of greater than or equal to 100°C and less than or equal to 200°C, and has a composition different from the first binder, and an average thickness T of the intermediate layer at a region where there is no second particle is greater than or equal to 0.1 µm and less than or equal to 5 µm, and a value obtained by dividing an average short axis diameter of the second particles by the average thickness T of the intermediate layer is greater than or equal to 1 and less than or equal to 4.

### ADVANTAGEOUS EFFECTS OF INVENTION

With the electrode according to an aspect of the present disclosure, the interface resistance between the core and the mixture layer can be effectively reduced.

### BRIEF DESCRIPTION OF DRAWINGS

FIG. 1 is a diagram schematically showing a cross section of an electrode according to an embodiment of the present disclosure.
FIG. 2 is an enlarged view of an A part in FIG. 1.
FIG. 3(a) is a diagram showing a mixing process of a mixture material, and FIG. 3(b) is a diagram showing a rolling process of the mixture, in a production process of an electrode according to an embodiment of the present disclosure.
FIG. 4 is a diagram showing a lamination process of a mixture sheet.
FIG. 5 is a diagram schematically showing a cross section of an intermediate layer of Comparative Example.
FIG. 6 is a diagram schematically showing a cross section of an intermediate layer of Comparative Example.

### DESCRIPTION OF EMBODIMENTS

An electrode according to an embodiment of the present disclosure will now be described in detail with reference to the drawings. A selective combination of a plurality of embodiments and alternative configurations described below is within the scope of the present disclosure.

An electrode according to the present disclosure is desirable for a non-aqueous electrolyte secondary battery such as a lithium ion battery, but may alternatively be applied to a battery including an aqueous electrolyte, or an electricity storage device such as a capacitor. In the following, a case will be exemplified in which the electrode is applied to an electrode, in particular, a positive electrode, for a non-aqueous electrolyte secondary battery.

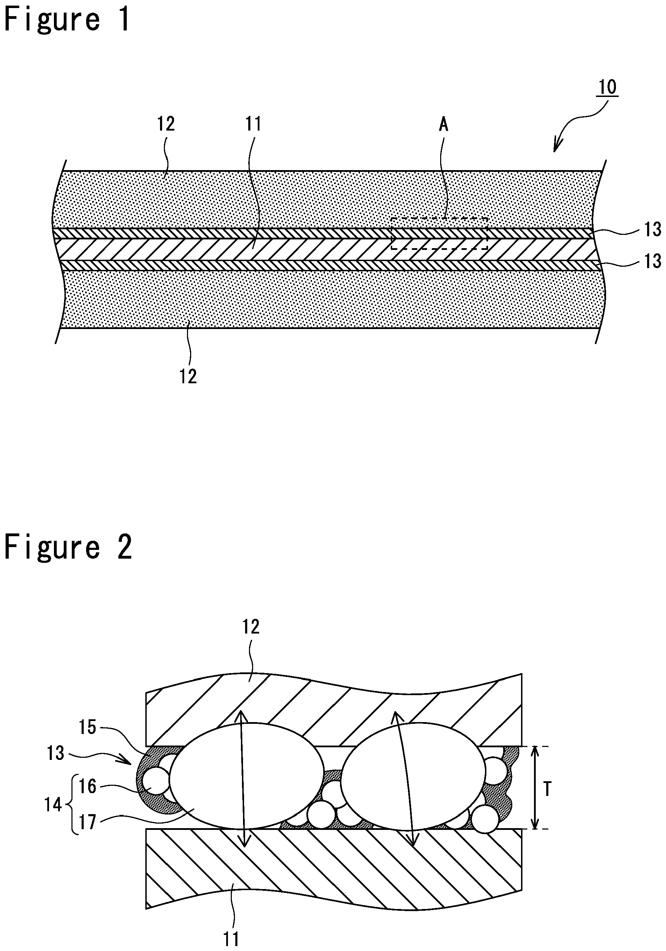

FIG. 1 is a diagram schematically showing a cross section of an electrode 10 according to an embodiment of the present disclosure. As shown in FIG. 1, the electrode 10 comprises a core 11, a mixture layer 12 provided over the core 11, and an intermediate layer 13 which is electrically conductive and which is provided between the core 11 and the mixture layer 12. The electrode 10 comprises the intermediate layer 13 and the mixture layer 12 over both surfaces of the core 11. A thickness of the mixture layer 12 is, for example, greater than or equal to 30 µm and less than or equal to 120 µm on one side of the core 11, and is desirably greater than or equal to 50 µm and less than or equal to 100 µm. The electrode 10 may be an elongated electrode forming a wound-type electrode assembly, or an electrode of a strip shape forming a layered electrode assembly.

For the core 11, there may be employed a metal foil, or a film on a surface layer of which a metal layer is formed. A thickness of the core 11 is, for example, greater than or equal to 5 µm and less than or equal to 20 µm. In the case of a positive electrode, a metal foil having aluminum as a primary component may be used for the core 11. In the case of a negative electrode, a metal foil having copper as a primary component may be used. In the present disclosure, the primary component refers to a constituting component having the highest mass ratio. The core 11 may be an aluminum foil formed from substantially 100% aluminum, or a copper foil formed from substantially 100% copper.

The mixture layer 12 is also called an active material layer, and includes an active material and a binder (first binder). The mixture layer 12 may include a conductive agent, and, in particular, when the electrode 10 is the positive electrode, the mixture layer 12 desirably includes the conductive agent. Examples of the conductive agent include carbon materials such as carbon black, acetylene black, Ketjenblack, carbon nanotube, graphite, and the like. A content of the conductive agent is, for example, greater than or equal to 0.5 mass% and less than or equal to 5 mass% with respect to the mass of the mixture layer 12. As will be described later in detail, the mixture layer 12 is formed from a mixture sheet 12z produced through a dry process, and the mixture layer 12 desirably includes a fibrous binder.

A desirable conductive agent included in the mixture layer 12 is an electrically conductive particle having a particle size of greater than or equal to 0.005 µm and less than or equal to 0.07 µm that forms an aggregated structure of a beaded shape. For the conductive agent of the mixture layer 12, the same particle or a similar particle as a first particle 16 of the intermediate layer 13 to be described later may be employed. By the mixture layer 12 and the intermediate layer 13 including the above-described electrically conductive particle, the aggregated structure of the beaded shape can be formed also at the interface between the mixture layer 12 and the intermediate layer 13, and conduction at the interface between the mixture layer 12 and the intermediate layer 13 can more easily be realized.

For the active material of the positive electrode (positive electrode active material), in general, a lithium-transition metal composite oxide is used. Examples of metal elements contained in the lithium-transition metal composite oxide include Ni, Co, Mn, Al, B, Mg, Ti, V, Cr, Fe, Cu, Zn, Ga, Sr, Zr, Nb, In Sn, Ta, W, and the like. Of these elements, inclusion of at least one element selected from Ni, Co, and Mn is desirable. A content of the positive electrode active material is desirably greater than or equal to 85 mass% and less than or equal to 99 mass% with respect to the mass of the mixture layer 12, and is more desirably greater than or equal to 90 mass% and less than or equal to 99 mass% (a content of a negative electrode active material is similar to the content of the positive electrode active material).

The positive electrode active material is a secondary particle formed by a plurality of primary particles being aggregated. A volume-based median size (D50) of the positive electrode active material is desirably greater than or equal to 3 µm and less than or equal to 30 µm. D50 means a particle size at which an accumulation of frequencies in a volume-based particle size distribution reaches 50% from the lower side, and is also called a middle size. The particle size distribution of the positive electrode active material can be measured using a particle size distribution measurement apparatus of a laser diffraction type (for example, MT3000II manufactured by MicrotracBEL corporation), and using water as a dispersion medium.

For an active material of the negative electrode (negative electrode active material), for example, a carbon-based active material is employed such as a natural graphite such as flake graphite, massive graphite, amorphous graphite, or the like, and an artificial graphite such as massive artificial graphite (MAG), graphitized meso-phase carbon microbeads (MCMB), or the like. Alternatively, for the negative electrode active material, an active material containing Si, Sn, or the like which forms an alloy with lithium may be used.

The fibrous binder included in the mixture layer 12 can be produced by, for example, fibrillating, with a dry grinder such as a jet mill grinder, polytetrafluoroethylene (PTFE) particles which belong to fine powders which can be fibrillated (fibrosed). No particular limitation is imposed on an average particle size of the PTFE particles, but the average particle size is desirably greater than or equal to 100 µm and less than or equal to 500 µm, and is more desirably greater than or equal to 100 µm and less than or equal to 400 µm. The average particle size of the PTFE particles can be determined by observing the PTFE particles with a scanning electron microscope (SEM). More specifically, after identifying outer shapes of 100 particles which are randomly selected, a long size (longest size) of each of the 100 particles is determined, and an average value of the 100 long sizes is determined as the average particle size.

A content of the fibrous binder is, for example, greater than or equal to 0.1 mass% and less than or equal to 5 mass% with respect to the mass of the mixture layer 12. The fibrous binder attaches on a particle surface of the active material, and is entangled with the active material. That is, a layer structure of the mixture layer 12 is formed by the active material being held by the fibrous binder which is present in a mesh shape. The mixture layer 12 may include, in addition to the fibrous binder, a particulate binder such as polyvinylidene fluoride (PVdF) which is not fibrillated.

When the mixture layer 12 is equally divided into three regions in the thickness direction, with respective regions defined as a first region, a second region, and a third region from the side of the core 11, a content (a) of the fibrous binder in the first region, a content (b) of the fibrous binder in the second region, and a content (c) of the fibrous binder in the third region desirably satisfy a condition of (c-a)/(a+b+c)≤±10%, and more desirably satisfy a condition of (c-a)/(a+b+c)≤±5%. That is, the fibrous binder is present approximately uniformly over the entirety of the mixture layer 12 without being locally distributed at a part of the mixture layer 12.

A density of the mixture layer 12 is desirably greater than or equal to 2.5 g/cc and less than or equal to 4.5 g/cc, is more desirably greater than or equal to 3.0 g/cc and less than or equal to 4.2 g/cc, and is particularly desirably greater than or equal to 3.0 g/cc and less than or equal to 4.0 g/cc, in particular when the mixture layer 12 is a positive electrode mixture layer. When the density of the mixture layer 12 is within these ranges, a battery can be realized which has high energy density, and has, with the function of the intermediate layer 13, low resistance and superior rapid charging/discharging characteristic. The structure of the electrode 10 is particularly desirable when the density of the mixture layer 12 is greater than or equal to 3.0 g/cc and less than or equal to 4.0 g/cc.

A structure of the intermediate layer 13 will now be described in detail with reference to FIG. 2. FIG. 2 is an enlarged view of an A part in FIG. 1.

As shown in FIG. 2, the intermediate layer 13 is interposed between the core 11 and the mixture layer 12, and reduces the interface resistance between the core 11 and the mixture layer 12. In addition, the intermediate layer 13 has a function to improve an adhesion force of the mixture layer 12 with respect to the core 11. That is, the intermediate layer 13 functions as an electrically conductive layer and as an adhesion layer. The intermediate layer 13 includes a conductive agent 14 and a binder 15 (second binder). The intermediate layer 13 includes, as the conductive agent 14, two kinds of electrically conductive particles (first particles 16 and second particles 17). With this configuration, a superior conductive path can be secured, and the interface resistance between the core 11 and the mixture layer 12 can be reduced.

A content of the conductive agent 14 is desirably greater than or equal to 50 mass% and less than or equal to 90 mass% with respect to a mass of the intermediate layer 13, and is more desirably greater than or equal to 60 mass% and less than or equal to 90 mass% or greater than or equal to 65 mass% and less than or equal to 85 mass%. When the content of the conductive agent 14 is within these ranges, low interface resistance and high adhesion force can be both easily realized at the interface between the core 11 and the mixture layer 12. In the present embodiment, the intermediate layer 13 is formed substantially solely with the conductive agent 14 and the binder 15. A content of the binder 15 is desirably greater than or equal to 10 mass% and less than or equal to 50 mass% with respect to the mass of the intermediate layer 13, and is more desirably greater than or equal to 10 mass% and less than or equal to 40 mass% or greater than or equal to 15 mass% and less than or equal to 35 mass%.

The conductive agent 14 desirably has a particle size distribution including a first peak with a particle size in a range of greater than or equal to 0.005 µm and less than or equal to 0.07 µm, and a second peak with a particle size in a range of greater than or equal to 0.3 µm and less than or equal to 20 µm. The particle size distribution of the conductive agent 14 is a volume-based particle size distribution, and is determined by measuring a diameter of a circumscribing circle of a particle from a cross-sectional SEM image of the intermediate layer 13. Further, a value similar to the particle size distribution determined from the cross-sectional SEM image may be obtained also by measuring a particle size distribution of powder of the conductive agent 14 added to the intermediate layer 13, using a particle size distribution measurement apparatus of a laser diffraction type. The particle size range of the first peak is more desirably greater than or equal to 0.01 µm and less than or equal to 0.04 µm, and the particle size range of the second peak is more desirably greater than or equal to 0.5 µm and less than or equal to 10 µm.

The conductive agent 14 includes first particles 16 forming the first peak, and second particles 17 forming the second peak. In the present disclosure, when the first peak and the second peak overlap, the first particles 16 and the second particles 17 are classified by the particle size at a valley of the two peaks.

The conductive agent 14 desirably includes the first particles 16 having a particle size of greater than or equal to 0.005 µm and less than or equal to 0.07 µm that form an aggregated structure of beaded shape, and the second particles 17 having a short axis diameter of greater than or equal to 0.3 µm and less than or equal to 20 µm, and an aspect ratio of greater than or equal to 1 and less than or equal to 9. The aggregated structure of the beaded shape is also called a texture structure. The aspect ratio is a value obtained by dividing a long axis diameter of the particle by the short axis diameter. The intermediate layer 13 is formed, for example, using the first particles 16 and the second particles 17 having different volume-based D50, which are measured by the particle size distribution measurement apparatus of the laser diffraction type. D50 of the first particles 16 is greater than or equal to 0.005 µm and less than or equal to 0.07 µm, and D50 of the second particles 17 is greater than or equal to 0.5 µm and less than or equal to 10 µm.

The aspect ratio of the first particles 16 does not significantly affect the formation of the conductive path of the intermediate layer 13 and the like, and may be larger or smaller than the aspect ratio of the second particles 17. On the other hand, the short axis diameter and the aspect ratio of the second particles 17 are considered to significantly affect the formation of the conductive path, and an average aspect ratio of the second particles 17 is desirably less than or equal to 9. The particle size measured using the particle size distribution measurement apparatus of the laser diffraction type shows a value similar to or proximate to the long axis diameter.

As described above, the second particles 17 are particles having the short axis diameter of greater than or equal to 0.3 µm and less than or equal to 20 µm. In the present disclosure, the short axis diameter of the second particle 17 is determined by the following procedure.
(1) The long axis diameter of the second particles 17 is determined. The long axis diameter refers to a length of the longest straight line among straight lines connecting two points on an outer circumference of the particle in the particle cross-sectional image.
(2) Of straight lines which extend from a middle point of the long axis diameter (the longest straight line described above) to the outer circumference of the particle, and intersecting the straight line, a length of the shortest straight line is measured. The length of the shortest straight line is the short axis diameter.

The average short axis diameter of the second particles 17 is desirably greater than or equal to 0.3 µm and less than or equal to 20 µm, more desirably greater than or equal to 0.4 µm and less than or equal to 10 µm, and particularly desirably greater than or equal to 0.5 µm and less than or equal to 5 µm. The average short axis diameter is calculated by averaging short axis diameters of 100 randomly-selected second particles 17. When the average value of the short axis diameter is within these ranges, the improvement advantage of the conductivity in the intermediate layer 13 becomes more significant. The long axis diameter of the second particles 17 may be any value which results in the aspect ratio of less than or equal to 9. The conductive agent 14 may further include electrically conductive particles which do not belong to the first particles 16 or the second particles 17, so long as the advantage of the present disclosure is not adversely affected.

The average aspect ratio of the second particles 17 is desirably greater than or equal to 1 and less than or equal to 9, more desirably greater than or equal to 1 and less than or equal to 7, and particularly desirably greater than or equal to 1 and less than or equal to 5, and may be greater than or equal to 1 and less than or equal to 2. The average aspect ratio is calculated by averaging aspect ratios of 100 randomly-selected second particles 17. When the average value of the aspect ratio is within these ranges, the improvement advantage of the conductivity in the intermediate layer 13 becomes more significant. A better conductive path is formed and the interface resistance between the core 11 and the mixture layer 12 can be more effectively reduced when a particle close to a true sphere is used as the second particle 17 than when an elongated particle or plate-shape particles is used as the second particle 17.

A thickness of the intermediate layer 13 significantly differs between a region where there is the second particle 17 and a region where there is no second particle 17. The second particle 17 can be more easily placed with the direction of the short axis diameter oriented along the thickness direction of the intermediate layer 13. The second particle 17 may extend into the mixture layer 12. For example, one second particle 17 directly connects the core 11 and the mixture layer 12, and first particles 16 present around the second particle 17 form a conductive path connected to the second particle 17. An average thickness T of the intermediate layer 13 is desirably greater than or equal to 0.1 µm and less than or equal to 5 µm in a region where there is no second particle 17, is more desirably greater than or equal to 0.2 µm and less than or equal to 4 µm, and particularly desirably greater than or equal to 0.25 µm and less than or equal to 3 µm.

The relationship between the thickness of the intermediate layer 13 and the particle size of the second particle 17 is very important in forming a superior conductive path and reducing the interface resistance between the core 11 and the mixture layer 12. More specifically, a value obtained by dividing the average short axis diameter of the second particle 17 by the average thickness T of the intermediate layer 13 at a region where there is no second particles 17 is desirably greater than or equal to 1 and less than or equal to 4. That is, it is desirable that the short axis diameter of the secondary particle 17 is greater than or equal to the thickness of the intermediate layer 13. As a desirable example, the average short axis diameter of the second particle 17 is greater than or equal to 0.5 µm and less than or equal to 5 µm, the average aspect ratio is greater than or equal to 1 and less than or equal to 5, the average thickness T of the intermediate layer 13 is greater than or equal to 0.25 µm and less than or equal to 3 µm, and the value of (average short axis diameter of the second particle 17)/(average thickness T of the intermediate layer 13) is greater than or equal to 1 and less than or equal to 4.

The second particle 17 is more difficult to be taken into the binder 15 than the first particle 16 which is a small particle, and a superior conductive path is formed between the core 11 and the mixture layer 12 by adding a predetermined amount of the second particles 17. When the value of (average short axis diameter of the second particle 17)/(average thickness T of the intermediate layer 13) is greater than or equal to 1 and less than or equal to 4, the improvement advantage of the conductivity becomes more significant, and it is considered that the interface resistance can be more effectively reduced. When this value exceeds 4, the second particle is too large in comparison to the average thickness T of the intermediate layer, and the close-contact property between the intermediate layer and the mixture layer is considered to be degraded, resulting in a tendency of the interface resistance to increase.

A content of the first particles 16 is greater than or equal to 1 mass% and less than or equal to 40 mass% with respect to the mass of the conductive agent 14. The conductive agent 14 may include a third particle which does not belong to the first particle 16 or the second particle 17, but the conductive agent 14 of the present embodiment is formed substantially solely from the first particles 16 and the second particles 17, and a content of the second particles 17 is greater than or equal to 60 mass% and less than or equal to 99 mass% with respect to the mass of the conductive agent 14. With the use of the conductive agent 14 having the above-described particle size distribution, and by controlling the mixture ratio of the first particles 16 which are small particles, and the second particles 17 which are large particles within the above-described range, it becomes possible to secure a high adhesion force while reducing the resistance at the interface between the core 11 and the mixture layer 12.

The content of the first particles 16 is more desirably greater than or equal to 10 mass% and less than or equal to 35 mass% or greater than or equal to 20 mass% and less than or equal to 35 mass% with respect to the mass of the conductive agent 14. When the content of the first particle 16 is less than 1 mass%, the adhesion force of the mixture layer 12 with respect to the surface of the core 11 is reduced, and it becomes difficult to secure sufficient peeling strength. As a result, the interface resistance between the core 11 and the mixture layer 12 is considered to increase. On the other hand, when the content of the first particles 16 exceeds 40 mass%, the interface resistance significantly increases. It can be considered that a superior conductive path can be formed by adding a predetermined amount of the second particles 17, as described above.

The conductive agent 14 is a particle formed from a material having electrical conductivity. A desirable example of the conductive agent 14 is a carbon material. Specific examples of the carbon material include carbon black, acetylene black, Ketjenblack, carbon nanotube, and graphite. The first particle 16 and the second particle 17 may be formed by a carbon material of the same kind, or by carbon materials of different kinds. The first particle 16 which is a small particle has a larger specific surface area per mass than the second particle 17 which is a large particle, and a BET specific surface area of the fist particle 16 is, for example, greater than or equal to 100 m²/g and less than or equal to 200 m²/g.

The binder 15 has, as a primary component, a thermoplastic resin having a melting point of greater than or equal to 100°C and less than or equal to 200°C, and has a composition different from the binder of the mixture layer 12. The binder 15 may be formed substantially solely from the thermoplastic resin. For example, during a lamination process to be described later, the binder 15 fuses or softens, and strongly adheres to the core 11 and the mixture layer 12. The mixture layer 12 desirably has, as a primary component, a resin which is difficult to fuse or soften during the lamination process. A desirable combination of the binders of the layers is fibrillated PTFE as the binder of the mixture layer 12, and a homopolymer or a copolymer of vinylidene fluoride as the binder 15 of the intermediate layer 13.

The binder 15 is, for example, locally distributed around the first particle 16 in the intermediate layer 13. As describe above, the first particles 16 have a larger BET specific surface area than the second particle 17, and are aggregated in the beaded shape. Thus, affinity with the binder 15 is high, and the binder 15 is present in a large amount around the first particle 16. In the present embodiment, a ratio of the region of the surface of the first particle 16 covered by the binder 15 is larger than a ratio of a region of the surface of the second particle 17 covered by the binder 15. The local presence of the binder 15 around the first particle 16 can be confirmed by applying mapping analysis of the constituting elements of the binder 15 with energy dispersive X-ray (EDX), from the SEM image of the surface of the intermediate layer 13.

The intermediate layer 13 can be formed by applying a slurry including the conductive agent 14 and the binder 15 over a surface of the core 11, and drying the coating film. As the conductive agent 14, the first particle 16 having a volume-based D50 of greater than or equal to 0.005 µm and less than or equal to 0.07 µm, and the second particle 17 having an average short axis diameter of greater than or equal to 0.3 µm and less than or equal to 20 µm and the average aspect ratio of greater than or equal to 1 and less than or equal to 9 are used. Examples of a dispersion medium of the slurry include N-methyl-2-pyrrolidone (NMP), water, and the like. Alternatively, the intermediate layer 13 may be formed on the surface of the core 11 through a dip-coat method, or a spray-coat method, and using a gravure coater, a die coater, a bar coater, or the like.

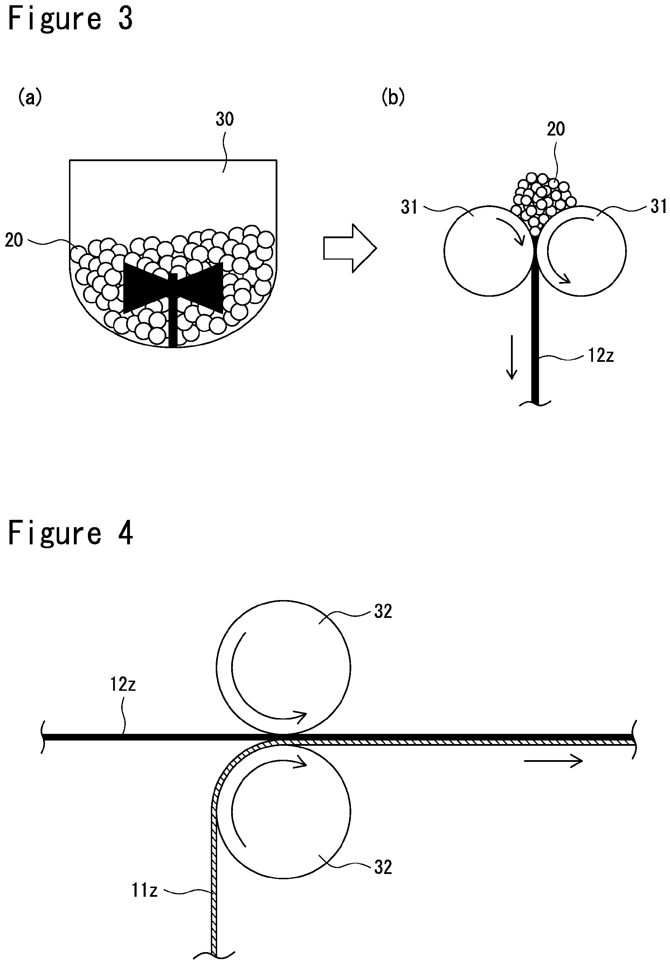

A method of producing the electrode 10 will now be described with reference to FIGs. 3 and 4. In the following, a method of producing a positive electrode is exemplified, but the production method may alternatively be applied for production of a negative electrode. FIG. 3(a) shows a mixing process in which mixture materials are mixed to produce a mixture 20, and FIG. 3(b) shows a rolling process in which the mixture 20 is rolled to produce a mixture sheet 12z. FIG. 4 shows a lamination process in which a core 11z of an elongated shape and the mixture sheet 12z are laminated.

As shown in FIG. 3, the mixture sheet 12z is produced in a dry process using the mixture 20 having substantially 100% solid content concentration. As will be described later in detail, the electrode 10 is produced by laminating mixture sheets 12z on both surfaces of the core 11z on which the intermediate layer 13 is formed. In the dry process, no solvent is used when mixing the mixture materials, and the mixture 20 is produced having substantially 100% solid content concentration. In the mixing process, an active material, a fibrous binder, and a conductive agent are mixed by a mixer 30 to produce the mixture 20.

For the mixer 30, a mechanical stirring mixer which is known in the related art and which can apply a mechanical shearing force may be employed. Specific examples of the mixer 30 include a cutter mill, a pin mill, a bead mill, a particulate composite apparatus (an apparatus in which a shearing force is produced between a rotor which rotates with a high speed in a tank and which has a special shape, and a collision plate), a granulator, a twin screw extrusion and kneading apparatus, and a kneader such as a planetary mixer. Of these, the cutter mill, the particulate composite apparatus, the granulator, or the twin screw extrusion and kneading apparatus is desirable. In the mixing process, while the mixture materials are mixed, the fibrous binder can be further fibrillated.

A treatment time of the mixing process (time during which the shearing force is applied to the mixture materials) is desirably within a few minutes, and is, for example, greater than or equal to 0.5 minutes and less than or equal to 10 minutes. When the treatment time is too long, the amount of the conductive agent taken into the fibrous binder is increased, and the conductivity of the mixture sheet 12z may be reduced. The mixing process may include a process of mixing the active material and the conductive agent to produce a coated active material, and a process of mixing the coated active material and the fibrous binder. By using the coated active material produced by mixing the active material and the conductive agent, the time for mixing the coated active material and the fibrous binder can be shortened. With this configuration, the amount of the conductive agent taken into the fibrous binder can be reduced.

For the dry mixing of the active material and the conductive agent, mechano-fusion method may be employed. By applying the mechano-fusion method, a binding force of the conductive agent with respect to the particle surface of the active material can be strengthened. As a mechano-fusion reaction apparatus, there may be exemplified Nobilta (registered trademark) grinder or Mecahno Fusion (registered trademark) grinder manufactured by Hosokawa Micron Corporation, Hybridizer (registered trademark) grinder manufactured by Nara Machinery Co., Ltd., Balance Gran manufactured by Freund-Turbo Corporation, and COMPOSI manufactured by Nippon Coke & Engineering Co., Ltd.

The mixture 20 obtained by the mixing process is shaped into a sheet shape in the rolling process. In an example configuration shown in FIG. 3(b), the mixture 20 is rolled by two rollers 31 to obtain the mixture sheet 12z. The two rollers 31 are placed with a predetermined gap therebetween, and rotate in the same direction. The mixture 20 is supplied to the gap between the two rollers 31, compressed by the two rollers 31, and stretched to the sheet shape. The two rollers 31 have, for example, the same diameter. The mixture sheet 12z may be passed through the gap between the two rollers 31 a plurality of times, or may be thermally pressed using heated roller(s) 31.

A thickness of the mixture sheet 12z can be controlled, for example, through the gap of the two rollers 31, a circumferential speed, and the number of stretching processes. In the rolling process, the mixture 20 may be shaped in the sheet shape using two rollers 31 which differ in the circumferential speed ratio of greater than or equal to twice. By employing different circumferential speed ratios for the two rollers 31, it becomes easier to thin the mixture sheet 12z, and to consequently improve the productivity. Further, it is desirable to further compress the mixture sheet 12z to realize a higher density. In the compressing process, for example, a linear pressure of greater than or equal to 1 t/cm and less than or equal to 3 t/cm may be applied.

As shown in FIG. 4, by laminating the mixture sheet 12z to the core 11z of the elongated shape, the mixture layer 12 formed from the mixture sheet 12z is provided on the surface of the core 11z. FIG. 4 shows the process of joining the mixture sheet 12z only to one surface of the core 11z, but the mixture sheets 12z are actually joined to both surfaces of the core 11z. The two mixture sheets 12z may be simultaneously joined to both surfaces of the core 11z, or one of the two sheets may be joined to one surface of the core 11z, and then, the other sheet may be joined to the other surface.

In the lamination process, the mixture sheet 12z is laminated on the surface of the core 11z using two rollers 32. For example, temperatures of the two rollers 32 are greater than or equal to 50°C and less than or equal to 300°C, desirably greater than or equal to 100°C and less than or equal to 200°C, and the linear pressure applied by the two rollers 32 is smaller than the linear pressure applied in the compressing process described above, and is, for example, greater than or equal to 0.1 t/cm and less than or equal to 2 t/cm. By cutting the core 11z having the mixture sheets 12z formed on both surfaces thereof into a predetermined electrode size, the electrode 10 having the above-described structure is obtained. On both surfaces of the core 11z subjected to the lamination process, the intermediate layer 13 is formed, and the mixture sheets 12z are joined to both surfaces of the core 11z with the intermediate layers 13 therebetween. As described above, the intermediate layer 13 is formed by applying the slurry including two kinds of conductive agents and the binder over both surfaces of the core 11z, and drying and rolling the coating film.

### EXAMPLES

The present disclosure will now be described in further detail with reference to Examples. The present disclosure, however, is not limited to the Examples described below.

### <Example 1>

### [Formation of Intermediate Layer]

Carbon black having D50 of 0.023 µm and an average aspect ratio of greater than or equal to 1 time and less than or equal to 1.3 times (first particle), and carbon black having an average long axis diameter of 2.2 µm, an average short axis diameter of 1.3 µm, and an average aspect ratio of 1.6 times (second particle) were mixed with a mass ratio of 25:75 to prepare a conductive agent. The conductive agent and a homopolymer of vinylidene fluoride (PVdF) were mixed with a mass ratio of 71:29 to prepare a slurry using NMP as a dispersion medium. The slurry was then applied over a surface of an electrode core formed from an aluminum foil having a thickness of 14 µm, the coating film was dried, and then the coating film was rolled by a rolling roller to form an intermediate layer, including two kinds of carbon blacks having different particle sizes and PVdF, on the surface of the core. The core on both surfaces of which the intermediate layers were formed was cut into a predetermined electrode size. An average thickness (film thickness) of the intermediate layer at a region where there was no second particle was 0.5 µm. A value of (average short axis diameter of the second particle)/(average thickness of the intermediate layer) was 2.6.

### [Production of Positive Electrode Mixture Sheet]

Using NOB300-Nobilta (registered trademark) manufactured by Hosokawa Micron Corporation, 1000 g of lithium-transition metal composite oxide, and 10 g of carbon black which was identical to the first particle used in the intermediate layer were mixed for 5 minutes to produce a carbon-coated positive electrode active material in which carbon black was attached on a particle surface of the composite oxide. The carbon-coated positive electrode active material and fibrous binder in which PTFE particles were fibrillated were introduced to Wonder Crusher manufactured by Osaka Chemical Co., Ltd., with a mass ratio of 101:0.8, and were mixed for 5 minutes at the room temperature and at the number of rotations at scale 5. The maximum number of rotations of the Wonder Crusher is at the scale of 10, and is 28000 rpm.

With the above-described mixing process, a positive electrode mixture was obtained in which the carbon-coated positive electrode active material and the fibrous binder were uniformly dispersed. The obtained positive electrode mixture had a solid content concentration of 100%. The positive electrode mixture was passed between two rollers to roll the positive electrode mixture, and a positive electrode mixture sheet was produced. With a circumferential speed ratio of two rollers being set at 1:3, a thickness of the positive electrode mixture sheet was adjusted to greater than or equal to 100 µm and less than or equal to 120 µm. Then, the obtained positive electrode mixture sheet was passed between two rollers at the room temperature and was compressed. A linear pressure applied in this compression process was set at 1 t/cm.

### [Production of Positive Electrode (Lamination Process)]

The positive electrode mixture sheet described above was placed over a core on both surfaces of which the intermediate layers were formed, and the layered assembly of the positive electrode mixture sheet and the core was pressed (with a linear pressure of 0.5 t/cm) using two rollers at the room temperature to obtain a positive electrode A1 in which the intermediate layers and the positive electrode mixture layers (positive electrode mixture sheet) were provided on both surfaces of the core. A thickness of the positive electrode A1 was adjusted to greater than or equal to 170 µm and less than or equal to 180 µm. A density of the positive electrode active material in the positive electrode mixture layer was adjusted to 3.7 g/cc. When the mixture layer was equally divided into three regions in the thickness direction, including a first region, a second region, and a third region from the side of the core, and a content of the fibrous binder in the first region was (a), a content of the fibrous binder in the second region was (b), and a content of the fibrous binder in the third region was (c), the value of (c-a)x100/(a+b+c) was equal to 1%.

For the positive electrode A1, the interface resistance was measured through the following method. Table 1 shows the measurement result of the interface resistance, along with the constitution of the positive electrode. In addition, a distribution of the binder in the intermediate layer (presence or absence of local distribution) was also checked. Table 2 shows the result as a mass ratio of fluorine (F mass%).

### [Measurement of Interface Resistance]

For the positive electrode A1, the interface resistance was measured using an electrode resistance measurement device (device name: XF057) manufactured by Hioki E. E. Corporation. The measurement current was set at 100 µA, and the voltage range was set at 0.5V.

### [Distribution of Binder in Intermediate Layer]

In an SEM image of the surface of the intermediate layer captured before the mixture layer was formed, three locations on the surface of the second particle and three locations at places other than the surface of the second particle were selected. For the six selected locations, mapping analysis of carbon and fluorine was performed using the EDX. Using an image analysis software, a mass ratio of fluorine was calculated for each of the six selected locations. For the three locations on the surface of the second particle and the three locations at places other than the surface of the second particle, average values were respectively calculated. The locations at places other than the surface of the second particle corresponded to a periphery of the first particle. An observation magnification was set at a suitable magnification within a range of greater than or equal to 2000 times and less than or equal to 20000 times.

### <Example 2>

A positive electrode A2 was produced in a manner similar to Example 1 except that, in the formation of the intermediate layer, carbon black having an average long axis diameter of 2.8 µm, an average short axis diameter of 0.6 µm, and an average aspect ratio of 4.5 time was used as the second particle, and the above-described assessment was performed. The value of (average short axis diameter of the second particle)/(average thickness of the intermediate layer) was 1.2.

### <Example 3>

A positive electrode A3 was produced in a manner similar to Example 1 except that an amount of application of the slurry for forming the intermediate layer was increased so that the average thickness of the intermediate layer was 1.0 µm, and the above-described assessment was performed. The value of (average short axis diameter of the second particle)/(average thickness of the intermediate layer) was 1.3.

### <Example 4>

A positive electrode A4 was produced in a manner similar to Example 2 except that a mixture ratio of the first particle and the second particle was set to 17:83, and the average thickness of the intermediate layer was set to 0.35 µm, and the above-described assessment was performed. The value of (average short axis diameter of the second particle)/(average thickness of the intermediate layer) was 3.7.

### <Example 5>

A positive electrode A5 was produced in a manner similar to Example 1 except that the compression process of the mixture sheet was omitted, and the above-described assessment was performed. The value of (average short axis diameter of the second particle)/(average thickness of the intermediate layer) was 2.6.

### <Comparative Example 1>

A positive electrode B 1 was produced in a manner similar to Example 1 except that, in the formation of the intermediate layer, the first particle was not used, and only the second particle was used as the conductive agent, and the above-described assessment was performed.

### <Comparative Example 2>

A positive electrode B1 was produced in a manner similar to Example 1 except that, in the formation of the intermediate layer, the second particle was not used, and only the first particle was used as the conductive agent, and the above-described assessment was performed.

### <Comparative Example 3>

A positive electrode B3 was produced in a manner similar to Example 1 except that the average thickness of the intermediate layer was set to 2.0 µm and the value of (average short axis diameter of the second particle)/(average thickness of the intermediate layer) was set to 0.65, and the above-described assessment was performed.

### <Comparative Example 4>

A positive electrode B4 was produced in a manner similar to Example 3 except that a large particle having an aspect ratio of 24 times was used, the average thickness of the intermediate layer was set to 1.0 µm, and the value of (average short axis diameter)/(average thickness of the intermediate layer) was set to 0.1, and the above-described assessment was performed.

**[Table 1]**

| | Second Particle (Large Particle) | | | First Particle | Intermediate Layer Thickness (µm) | Average Short-Axis Size /Thickness | Ratio of First Particle (mass%) | Content of Conductive Agent (mass%) | Interface Resistance (Ωcm²) | Mixture Density (g/cc) |
|---|---|---|---|---|---|---|---|---|---|---|
| | Average Long Axis Diameter (µm) | Average Short Axis Diameter (µm) | Aspect Ratio | D50 (µm) | | | | | | |
| B1 | 2.2 | 1.3 | 1.6 | - | 0.5 | 2.6 | 0 | 71 | 0.573 | 3.6 |
| B2 | - | - | - | 0.023 | 0.5 | - | 100 | 71 | 0.182 | 3.5 |
| B3 | 2.2 | 1.3 | 1.6 | 0.023 | 2.0 | 0.65 | 25 | 71 | 0.164 | 3.5 |
| B4 | 2.4 | 0.1 | 24 | 0.023 | 1.0 | 0.1 | 25 | 71 | 0.213 | 3.5 |
| A1 | 2.2 | 1.3 | 1.6 | 0.023 | 0.5 | 2.6 | 25 | 71 | 0.066 | 3.6 |
| A2 | 2.8 | 0.6 | 4.5 | 0.023 | 0.5 | 1.2 | 25 | 71 | 0.078 | 3.5 |
| A3 | 2.2 | 1.3 | 1.6 | 0.023 | 1.0 | 1.3 | 25 | 71 | 0.085 | 3.5 |
| A4 | 2.2 | 1.3 | 1.6 | 0.023 | 0.35 | 3.7 | 33 | 83 | 0.064 | 3.5 |
| A5 | 2.2 | 1.3 | 1.6 | 0.023 | 0.5 | 2.6 | 25 | 71 | 0.103 | 2.9 |

**[Table 2]**

| | Ratio of First Particle (mass%) | Binder Distribution, First Particle Portion (F mass%) | Binder Distribution, Second Particle Portion (F mass%) |
|---|---|---|---|
| B1 | 0 | - | 0.0 |
| B2 | 100 | 1.7 | - |
| B3 | 25 | 3.4 | 0.0 |
| B4 | 25 | 3.2 | 0.0 |
| A1 | 25 | 3.4 | 0.0 |
| A2 | 25 | 3.5 | 0.0 |
| A3 | 25 | 3.6 | 0.0 |
| A4 | 33 | 3.4 | 0.0 |
| A5 | 25 | 3.5 | 0.0 |

As shown in Table 1, all of the positive electrodes of Examples had lower interface resistances between the core and the mixture layer in comparison to the positive electrodes of Comparative Examples. The positive electrode of Comparative Example 1 comprising the intermediate layer which contained no first particle which was the small particle had a particularly high interface resistance. Further, the positive electrodes of Comparative Examples 3 and 4 having the value of the (average short axis diameter of the second particle (large particle))/(average thickness of the intermediate layer) of less than 1 had significantly higher interface resistances than the positive electrodes of Examples. Based on the results shown in Table 2, it can be understood that the binder of the intermediate layer is locally distributed around the first particle.

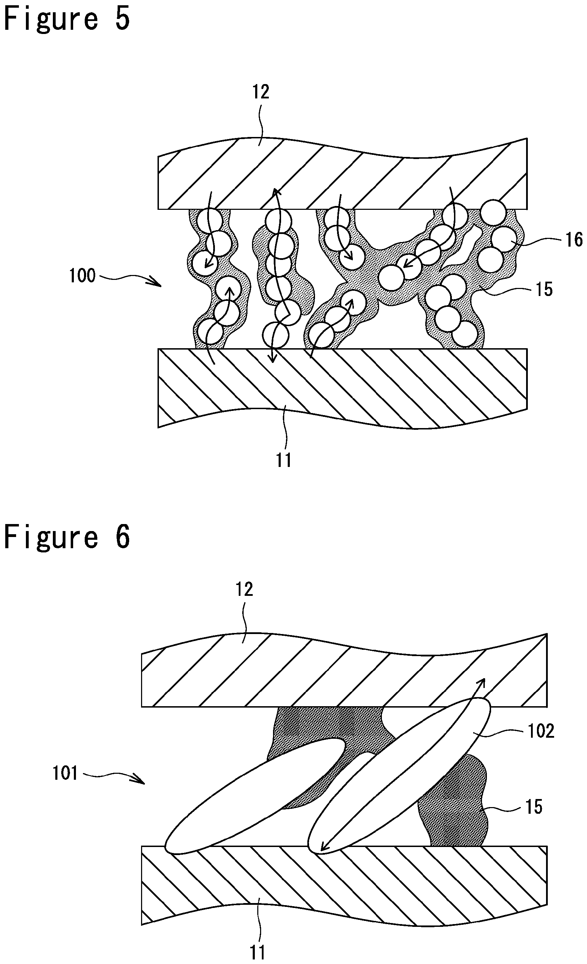

FIG. 5 is a diagram schematically showing a cross section of the positive electrode of Comparative Example comprising an intermediate layer 100 which does not include the second particle 17 which is the large particle. The intermediate layer 100 shown in FIG. 5 has a structure close to the intermediate layer of Comparative Example 2. In the intermediate layer 100, it can be considered that the first particle 16 is taken into the binder 15 and the conductive path is blocked, and the interface resistance is increased due to this blockage. That is, when there is no second particle 17 in the intermediate layer, or when the content of the second particle 17 is smaller than a predetermined amount, superior conductive path is not formed, and the interface resistance is significantly increased.

FIG. 6 is a diagram schematically showing a cross section of the positive electrode of Comparative Example 1 comprising an intermediate layer 101 which does not include the first particle 16 which is the small particle, and only includes a large particle 102. In the intermediate layer 101, it can be considered that, because the affinity between the first particle 16 and the binder 15 is low, the adhesion force of the intermediate layer 101 is reduced, and the interface resistance is consequently increased. That is, when there is no first particle 16 in the intermediate layer, or when the content of the first particle 16 is smaller than a predetermined amount, the peeling strength of the mixture layer is significantly reduced, and the interface resistance is significantly increased. In particular, it can be considered that the increase in the interface resistance becomes more significant when the aspect ratio of the large particle 102 is high.

In the contrary, according to the intermediate layer 13 shown in FIG. 2 (intermediate layer of Examples), by appropriately controlling the thickness of the intermediate layer 13 and the particle size of the second particle 17, superior conductive path can be formed, and the interface resistance can be reduced. In addition, due to the first particle 16 which is a small particle and which has high affinity with the binder 15, high peeling strength can be realized. In other words, interaction between the first particle 16 and the second particle 17 is effectively realized, and an electrode of low resistance can be realized.

### REFERENCE SIGNS LIST

10 electrode, 11 core, 11z core of elongated shape, 12 mixture layer, 12z mixture sheet, 13 intermediate layer, 14 conductive agent, 15 binder, 16 first particle, 17 second particle, 20 mixture, 30 mixer, 31, 32 roller.

## Claims

1. An electrode comprising:
a core;
a mixture layer provided over the core; and
an intermediate layer that is electrically conductive and that is provided between the core and the mixture layer, wherein
the mixture layer includes an active material and a first binder,
the intermediate layer includes a conductive agent and a second binder,
the conductive agent has a particle size distribution including a first peak with a particle size in a range of greater than or equal to 0.005 µm and less than or equal to 0.07 µm, and a second peak with a particle size in a range of greater than or equal to 0.3 µm and less than or equal to 20 µm,
a content of first particles forming the first peak is greater than or equal to 1 mass% and less than or equal to 40 mass% with respect to a mass of the conductive agent,
second particles forming the second peak have an average aspect ratio of greater than or equal to 1 and less than or equal to 9,
the second binder has, as a primary component, a thermoplastic resin having a melting point of greater than or equal to 100°C and less than or equal to 200°C, and has a composition different from the first binder, and
an average thickness T of the intermediate layer at a region where there is no second particle is greater than or equal to 0.1 µm and less than or equal to 5 µm, and a value obtained by dividing an average short axis diameter of the second particles by the average thickness T of the intermediate layer is greater than or equal to 1 and less than or equal to 4.

2. An electrode comprising:
a core;
a mixture layer provided over the core; and
an intermediate layer that is electrically conductive and that is provided between the core and the mixture layer, wherein
the mixture layer includes an active material and a first binder,
the intermediate layer includes a conductive agent and a second binder;
the conductive agent includes first particles having a particle size of greater than or equal to 0.005 µm and less than or equal to 0.07 µm that form an aggregated structure of beaded shape, and second particles having a short axis diameter of greater than or equal to 0.3 µm and less than or equal to 20 µm and an aspect ratio of greater than or equal to 1 and less than or equal to 9,
a content of the first particles is greater than or equal to 1 mass% and less than or equal to 40 mass% with respect to a mass of the conductive agent,
the second binder has, as a primary component, a thermoplastic resin having a melting point of greater than or equal to 100°C and less than or equal to 200°C, and has a composition different from the first binder, and
an average thickness T of the intermediate layer at a region where there is no second particle is greater than or equal to 0.1 µm and less than or equal to 5 µm, and a value obtained by dividing an average short axis diameter of the second particles by the average thickness T of the intermediate layer is greater than or equal to 1 and less than or equal to 4.

3. The electrode according to claim 1 or 2, wherein
the second binder is locally distributed around the first particle in the intermediate layer.

4. The electrode according to any one of claims 1 to 3, wherein
a content of the conductive agent is greater than or equal to 50 mass% and less than or equal to 90 mass% with respect to a mass of the intermediate layer.

5. The electrode according to any one of claims 1 to 4, wherein
the first binder is a fibrous binder, and
when the mixture layer is equally divided into three regions in a thickness direction, including a first region, a second region, and a third region from the side of the core, a content (a) of the fibrous binder in the first region, a content (b) of the fibrous binder in the second region, and a content (c) of the fibrous binder in the third region satisfy a condition of (c-a)/(a+b+c)≤±10%.

6. The electrode according to any one of claims 1 to 5, wherein
the conductive agent is a carbon material, and
the thermoplastic resin is a homopolymer or a copolymer of vinylidene fluoride.

7. The electrode according to any one of claims 1 to 6, wherein
a density of the mixture layer is greater than or equal to 3.0 g/cc and less than or equal to 4.0 g/cc.

8. The electrode according to any one of claims 1 to 7, wherein
the mixture layer includes a conductive agent having a particle size of greater than or equal to 0.005 µm and less than or equal to 0.07 µm that forms an aggregated structure of beaded shape.

9. The electrode according to any one of claims 1 to 8, wherein
the electrode is a positive electrode for a secondary battery.
